# EUROPÄISCHE PATENTSCHRIFT

(11) **EP 2 884 389 B1**
(45) Veröffentlichungstag und Bekanntmachung des Hinweises auf die Patenterteilung: **01.08.2018**
(21) Anmeldenummer: 14188578.0
(22) Anmeldetag: 13.10.2014
(51) Int. Cl.: G06F 8/60, G06F 8/654, G06F 9/4401, G06F 9/445, H04L 12/28

(54) **Funkmodul für einen Teilnehmer eines Gebäudeinstallationssystems sowie Verfahren zum Betreiben eines solchen Funkmoduls**
Radio module for a participant of a building installation system and method for operating such a radio module
Module radio pour un abonné d'un système d'installation de bâtiment, ainsi que procédé de fonctionnement d'un tel module radio

(30) Priorität: 12.12.2013 DE 102013113936
(43) Veröffentlichungstag der Anmeldung: 17.06.2015
(73) Patentinhaber: Insta GmbH, 58509 Lüdenscheid (DE)
(72) Erfinder: Bunte, Matthias, 58511 Lüdenscheid (DE)

(56) Entgegenhaltungen:
- EP-A1- 2 395 627
- EP-A2- 1 227 399
- US-A1- 2005 273 663
- THOMAS WIENZIERL: "KNX-RF Implementation based on MSP430 and CC1101", INTERNET CITATION, 30. November 2007 (2007-11-30), Seiten 1-10, XP002545074, Gefunden im Internet: URL:http://www.weinzierl.de/download/slaa3 90.pdf [gefunden am 2009-09-09]
- KNX ASSOCIATION: "KNX System Specifications, Architecture", 20090101 , 1. Januar 2009 (2009-01-01), Seiten 1-26, XP007921911, Gefunden im Internet: URL:http://www.knx.org/downloads-support/d ownloads/
- Anonymous: "Firmware - Wikipedia", , 5 November 2013 (2013-11-05), XP055169974, Retrieved from the Internet: URL:http://de.wikipedia.org/w/index.php?ti tle=Firmware&oldid=124153330 [retrieved on 2015-02-16]

## Beschreibung

Die Erfindung betrifft ein Funkmodul für einen Teilnehmer eines Gebäudeinstallationssystems mit einer Funkschnittstelle zur Kommunikation mit einem dem Gebäudeinstallationssystem zugehörigen Daten- und Kommunikations-Bus, wobei eine Kommunikation mit dem Daten- und Kommunikations-Bus mit einem ersten Betriebssystem oder einem alternativen Betriebssystem erfolgt. Ferner betrifft die Erfindung ein Verfahren zum Betreiben eines solchen Funkmoduls.

Bei Gebäudeinstallationssystemen sind die daran teilhabenden Sensoren und Aktoren über einen Daten- und Kommunikations-Bus miteinander verbunden. Bei den Sensoren kann es sich beispielsweise um Taster, Temperatur- oder Lichtsensoren und bei den Aktoren beispielsweise um die Beleuchtung, Jalousien oder Heizung/Lüftung handeln. Die Kommunikation über den Bus kann leitungsgebunden oder leitungsungebunden (drahtlos) erfolgen. Im letzteren Fall ist für die Kommunikation eine Funkverbindung vorgesehen. Ist ein Busteilnehmer drahtgebunden an den Bus angeschlossen, verfügt dieser über einen Busankoppler. Diese Funktion übernimmt im Falle einer Funkkommunikation bei dem Teilnehmer ein Funkmodul. Das Funkmodul umfasst eine Funkschnittstelle, über die die Kommunikation mit dem Bus erfolgt. Zum Betrieb der Funkschnittstelle ist ein Betriebssystem erforderlich. Hochgefahren wird das Betriebssystem durch Ablaufen lassen einer Startroutine - einem so genannten boot loader. Betrieben wird die Funkschnittstelle mit demjenigen Betriebssystem, mit dem der Bus arbeitet. Ein weit verarbeitetes Gebäudeinstallationsbusbetriebssystem ist der so genannte KNX. Es existieren jedoch eine Anzahl weiterer für diese Zwecke eingesetzte Betriebssysteme.

Das Funkmodul eines Teilnehmers eines Gebäudeinstallationssystems ist typischerweise eingebettetes System, und zwar eingebettet in die weitere Funktionalität des Teilnehmers. Eingebettet sind diese Systeme, um einen solchen Busteilnehmer nur mit solchen Ressourcen auszustatten, die konkret benötigt werden. Hierzu zählt auch, Bausteine oder Baugruppen, die sowohl von dem Funkmodul als auch von dem beispielsweise als Sensor ausgelegten weiteren Teil eines solchen Teilnehmers benötigt werden, nicht mehrfach vorzusehen, sondern nur einmal zu verbauen. Solche Ressourcen stehen dann beiden genannten Teilen des Teilnehmers zur Verfügung. Hierbei kann es sich beispielsweise um den Microcontroller handeln. Ein solcher wird zum Betrieb der Funkschnittstelle sowie zum Betrieb eines Sensors benötigt. Es versteht sich, dass ein Microcontroller die Funktionalitäten der beiden Teile des Busteilnehmers übernehmen kann.

Vor dem Hintergrund, dass es sich bei den in Rede stehenden Funkmodulen um eingebettete Module handelt, ist es für einen vorgesehenen Einsatz des Teilnehmers in unterschiedlichen Betriebssystemen erforderlich, für die unterschiedlichen Betriebssysteme jeweils eigene Module und damit eigene Teilnehmer herzustellen. Die Funkmodule für die unterschiedlichen Betriebssysteme unterscheiden sich in aller Regel ausschließlich durch das darin installierte Betriebssystem. Zwar könnte man daran denken, das jeweils zur Anwendung gelangende Betriebssystem nach der Installation des Teilnehmers in ein Gebäudeinstallationssystem in das Funkmodul einzuspielen. Da bei Funkteilnehmern der Zugriff auf die Funkschnittstelle über die Funkstrecke erfolgt und die Datenübertragungsrate in Gebäudeinstallationssystemen verwendeten Einrichtung in aller Regel nicht besonders hoch ist, kann die Zeitdauer zum Aufspielen einer Betriebssoftware für einen solchen Funkteilnehmer etliche Minuten in Anspruch nehmen, durchaus 15 bis 20 Minuten. Auch wenn dieses bei der Installation für einen einzigen Funkteilnehmer noch in Kauf genommen werden könnte, verbietet sich ein nachträgliches Aufspielen des Betriebssystems jedoch bei Installationen, die mehrere oder sogar eine Vielzahl Funkteilnehmer umfassen. Die zum Übertragen der Betriebssoftware auf die einzelnen Funkteilnehmer notwendige Zeitdauer wäre schlicht weg zu lange, und würde die Installation des Systems über Maßen verzögern.

Die EP 2 395 627 A1 zeigt ein Installationsgerät für ein elektrisches Installationssystem, mit einem Einsatzgerät und einem Aufsatzgerät. Das Einsatzgerät enthält ein Netzteil sowie Schnittstellen zum Installationssystem und zum Aufsatzgerät. Das Aufsatzgerät umfasst neben einer entsprechenden Schnittstelle Sensormittel und/oder Kommunikationsmittel, um ein Steuersignal zu erzeugen oder aufzunehmen. U.A. kann das Aufsatzgerät noch ein Plug-In umfassen, das z.B. als Funkmodul ausgebildet sein kann. Auch das Aufsatzgerät selbst kann ein Funkmodul sein. Software-Updates für das Aufsatzgerät bzw. den Betrieb des Plug-Ins können über die genannte Schnittstelle oder über eine Funkverbindung übertragen werden.

Die EP 1 227 399 A2 beschreibt ein Verfahren zur Software-Installation auf ein Computer-System, genauer einen Personal-Computer. Auf einem Speichermedium wird in eine erste und eine zweite Partition erzeugt und Software-Pakete, die verschiedenen Betriebssystemen entsprechen, werden als Image in der zweiten Partition gespeichert. Eine bootbare Software und eine Benutzerschnittstelle werden in der ersten Partition gespeichert. Beim Ablauf derselben kann ein Benutzer ein Software-Paket auswählen, das daraufhin in der ersten Partition installiert wird, wobei die bootbare Software und die Benutzerschnittstelle überschrieben werden.

Die US 2005/0273663 A1 offenbart ein Verfahren zum Umschalten zwischen Betriebssystemen, wobei ein Befehl zum Umschalten von einem ersten zu einem zweiten Betriebssystem empfangen wird, das Computer-system in einen Zustand mit niedrigem Energieverbrauch wechselt und anschließend das Computersystem unter Verwendung des zweiten Betriebssystems neu hochfährt. Das Umschalten zwischen den Betriebssystemen kann ggf. über ein drahtgebundenes oder drahtloses Netzwerk erfolgen.

Ausgehend von diesem diskutierten Stand der Technik liegt der Erfindung daher die Aufgabe zu Grunde, ein eingangs genanntes Funkmodul dergestalt auszuführen, dass, ohne dass die Ressourcen des Funkmoduls nennenswert erhöht werden müssten, vor Ort entschieden werden kann, ob der Funkteilnehmer mit dem einen oder anderen Betriebssystem für die Kommunikation mit dem Daten- und Kommunikations-Bus betrieben werden kann.

Gelöst wird diese Aufgabe erfindungsgemäß durch ein Funkmodul nach Anspruch 1, bei dem das Funkmodul neben dem ersten Betriebssystem als voreingestelltem Betriebssystem einen Programmspeicher mit dem darin abgelegten alternativen Betriebssystem zum Betreiben der Funkschnittstelle aufweist und bei dem der für das Hochfahren der Funkschnittstelle verantwortliche boot loader eine über die Funkschnittstelle beeinflussbare Einstellung aufweist, mit der in einer ersten Einstellung das erste Betriebssystem und in einer zweiten Einstellung das alternative Betriebssystem hochfährt.

Ein Funkteilnehmer eines Gebäudeinstallationssystems, der mit einem solchen Funkmodul ausgerüstet ist, kann entweder mit dem ersten voreingestellten Betriebssystem betrieben werden oder mit einem alternativen Betriebssystem, das in einem Programmspeicher des Funkmoduls abgelegt ist. Damit ist ein solches Funkmodul bereits werksseitig mit zumindest zwei Betriebssystemen ausgestattet, wobei eines der beiden Betriebssysteme voreingestellt ist. Dieses bedeutet, dass beim ersten Hochfahren der Funkschnittstelle das voreingestellte Betriebssystem geladen wird. Zu diesem Zweck verfügt der boot loader über eine beeinflussbare Einstellung, die bei Auslieferung eingestellt ist, damit beim Hochfahren der Funkschnittstelle auf das erste Betriebssystem zugegriffen wird. Daher wird im Rahmen dieser Ausführungen dieses Betriebssystem auch als voreingestellt angesprochen. Ist die Funkschnittstelle des Funkmoduls hochgefahren, ist mit einer auf diese zugreifenden Inbetriebnahmesoftware die diesbezügliche boot loader-Einstellung änderbar dergestalt, dass beim nächsten Hochfahren der Funkschnittstelle das alternative Betriebssystem geladen wird. Da dieses bereits in einem Programmspeicher des Funkmoduls abgelegt ist, entfällt das als lästig und zeitaufwändig angesehene Übertragen einer alternativen Betriebssoftware. Einzig, was ein solches Funkmodul gegenüber einem vorbekannten Funkmodul zu diesem Zweck aufweisen muss, ist, dass ein entsprechender Programmspeicher für das alternative Betriebssystem vorhanden ist. Das Vorsehen eines entsprechenden Speicherplatzes ist ohne weiteres möglich und verursacht vor allem keine nennenswerten Mehrkosten. Der Speicherbedarf des alternativen Betriebssystems kann, wenn gewünscht, dadurch reduziert werden, dass dieses komprimiert in dem Programmspeicher abgelegt ist. Entsprechend gering ist der benötigte Speicherplatz. Vor dem Hintergrund, dass in aller Regel ein einmal eingerichtetes Gebäudeinstallationssystem hinsichtlich des für den Bus benutzten Betriebssystems nicht mehr geändert wird, kann, wenn der Speicherplatz im Funkmodul klein gehalten werden soll, beim Einrichten des Funkteilnehmers auf einem Betrieb mit dem alternativen Betriebssystem ein Entpacken des alternativen Betriebssystems durch Überschreiben des voreingestellten Betriebssystems auf dessen Speicherplatz insgesamt oder teilweise auch zum Ablegen des entpackten alternativen Betriebssystems verwendet werden. Steht hingegen genügend Speicherplatz zur Verfügung, kann, wenn das erste Betriebssystem erhalten werden soll, vorgesehen sein, dieses vor dem Entpacken des alternativen Betriebssystems zu komprimieren. Steht noch mehr Speicherplatz zu Verfügung, können auch beide Betriebssysteme entpackt in einem Speicher oder jeweils in einem Speichersektor abgelegt sein. Von besonderem Vorteil bei diesem Konzept ist, dass trotz Erhöhung des Variabilität in dem Einsatz des Betriebssystems kein leistungsstärkeren Microcontroller eingesetzt werden muss.

Vorstehend ist das beanspruchte Funkmodul für einen Betrieb mit zwei Betriebssystemalternativen beschrieben worden. Es versteht sich, dass bei Vorhandensein von hinreichendem Speicherplatz auch mehrerer, etwa drei oder vier Betriebssystemen, typischerweise jeweils komprimiert einen Speicher als Teil des Funkmoduls abgelegt sein können.

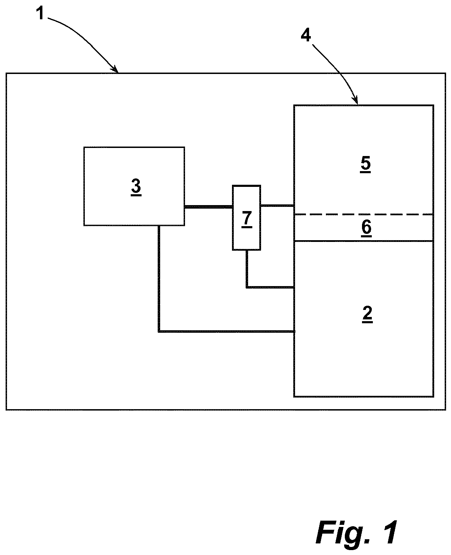

Nachfolgend ist die Erfindung anhand eines Ausführungsbeispiels unter Bezugnahme auf die beigefügte **Figur 1** beschrieben. Figur 1 zeigt nach Art eines schematisierten Blockschaltbildes einen Teilnehmer 1 eines im Übrigen nicht näher dargestellten Gebäudeinstallationssystems. Bei dem Teilnehmer 1 handelt es sich um einen so genannten Funkteilnehmer. Dieser umfasst daher ein Funkmodul 2. Das Funkmodul 2 verfügt über eine Funkschnittstelle, über die die Kommunikation oder auch der Datenaustausch im Rahmen der Buskommunikation erfolgt. Das Funkmodul 2 ist ausgebildet, Daten zu empfangen und Daten zu senden. Das Funkmodul 2 bildet mit den übrigen elektrischen/elektronischen Komponenten des Teilnehmers 1 ein eingebettetes System (embedded system). Dieses bedeutet, dass manche Ressourcen, beispielsweise ein Mikrocontroller 3 für den Betrieb des Funkmoduls 2 und für den Betrieb des Sensors oder Aktors des Teilnehmers 1 verwendet werden. Dem Funkmodul 2 ist ein Programmspeicher 4 zugeordnet, der bei dem dargestellten Ausführungsbeispiel zumindest zwei Sektoren 5, 6 umfasst. In jedem Sektor 5, 6 ist ein unterschiedliches Betriebssystem abgelegt. Dem Funkmodul 2 ist ferner ein boot loader 7 zugeordnet, der die beim Hochfahren des Funkmoduls 2 bzw. des Teilnehmers 1 die Startroutine beinhaltet. Der boot loader 7 beinhaltet eine einrichtbare Einstellung dergestalt, dass in Abhängigkeit von dieser Einstellung beim Hochfahren des Funkmoduls entweder das in dem Sektor 5 oder das in dem Sektor 6 abgelegte Betriebssystem verwendet wird. Diese Einstellung im boot loader 7 ist bei dem dargestellten Ausführungsbeispiel voreingestellt, damit beim erstmaligen Hochfahren das Funkmodul 2 mit dem in dem Sektor 5 abgelegten Betriebssystem hochgefahren wird. Das erstmalige Hochfahren des Teilnehmers 1 wird vorgenommen, nachdem dieses im Gebäude an der für den diesen Teilnehmer 1 vorgesehenen Stelle installiert und in diesem Zuge an eine Stromversorgung angeschlossen ist.

Eine Kommunikation mit dem Teilnehmer 1 über sein Funkmodul 2 ist mit dem geladenen Betriebssystem - dem in dem Sektor 5 gespeicherten - möglich. Wird der Teilnehmer 1 im Rahmen eines Daten- und Kommunikationsbusses eingesetzt, der mit diesem Betriebssystem arbeitet, ist der Teilnehmer 1 nunmehr einsatzbereit. Je nach Ausbildung des Bussystems und der Ausbildung des Teilnehmers 1 kann eine Installation desselben mittels einer Inbetriebnahmesoftware erfolgen.

Soll hingegen der Teilnehmer 1 mit dem in dem Sektor 6 abgelegten anderen Betriebssystem - dem alternativen Betriebssystem - betrieben werden, wird mit einer für dieses alternative Betriebssystem typischerweise eingesetzten Inbetriebnahmesoftware nach dem erstmaligen Hochfahren des Teilnehmers 1 die einrichtbare Einstellung in dem boot loader 7 geändert. Zwar kann mit der mit dem alternativen Betriebssystem arbeitenden Inbetriebnahmesoftware eine Inbetriebnahme des Teilnehmers 1 in aller Regel nicht vorgenommen werden, jedoch kann eine solche Inbetriebnahmesoftware auf den boot loader 7 zugreifen und die vorgenannte Einstellung ändern sowie den Teilnehmer 1 zu einem Neustart bringen. Aufgrund der in einem solchen Fall geänderten Einstellung in dem boot loader 7 wird beim nächsten Hochfahren die in dem Sektor 6 abgelegte Betriebssoftware geladen. Ist der Teilnehmer 1 hochgefahren, kann mit der Inbetriebnahmesoftware der Teilnehmer 1 unverzüglich eingerichtet und in Betrieb genommen werden.

Um den Speicherplatz des Programmspeichers 4 gering zu halten, ist vorgesehen, dass das alternative Betriebssystem in dem Sektor 6 komprimiert abgelegt ist. Insofern umfasst die Startroutine, mit der das in dem Sektor 6 komprimiert gespeicherte Betriebssystem geladen werden sollen, in einem Schritt ein Entpacken des Programms. Im Zuge des Entpackens dieses Betriebssystems wird das in dem Sektor 5 abgelegte Betriebssystem überschrieben. Eine solche Maßnahme beeinträchtigt die Funktionalität des Teilnehmers 1 hinsichtlich der gewünschten Kommunikation nicht, da das Betriebssystem in einem eingerichteten Daten- und Kommunikationsbus eines Gebäudeinstallationssystems selten geändert wird. Sollte tatsächlich das Betriebssystem geändert werden, müsste bei diesem Ausführungsbeispiel das neue Betriebssystem über die in dem Funkmodul 2 enthaltenen Funkschnittstelle in dem Programmspeicher 4 abgelegt werden. Es versteht sich, dass eine solche Maßnahme dann nicht erforderlich ist, wenn beiden Betriebssysteme im Programmspeicher 4 verbleiben.

### Bezugszeichenliste

- 1: Teilnehmer
- 2: Funkmodul
- 3: Mikrocontroller
- 4: Programmspeicher
- 5: Sektor
- 6: Sektor
- 7: boot loader

## Patentansprüche

1. Funkmodul für einen Teilnehmer (1) eines Gebäudeinstallationssystems mit einer Funkschnittstelle zur Kommunikation mit einem dem Gebäudeinstallationssystem zugehörigen Daten- und Kommunikations-Bus, wobei eine Kommunikation mit dem Daten- und Kommunikations-Bus mit einem ersten Betriebssystem oder einem alternativen Betriebssystem erfolgt, **dadurch gekennzeichnet, dass** das Funkmodul (2) neben dem ersten Betriebssystem als voreingestelltem Betriebssystem einen Programmspeicher (4) mit dem darin abgelegten alternativen Betriebssystem zum Betreiben der Funkschnittstelle aufweist und dass der für das Hochfahren der Funkschnittstelle verantwortliche boot loader (7) eine über die Funkschnittstelle beeinflussbare Einstellung aufweist, mit der in einer ersten Einstellung das erste Betriebssystem und in einer zweiten Einstellung das alternative Betriebssystem hochfährt, und dass das Funkmodul (2) so eingerichtet ist, dass beim ersten Hochfahren der Funkschnittstelle das voreingestellte Betriebssystem geladen wird und danach eine Beeinflussung der Einstellung des boot loaders (7) über eine auf die Funkschnittstelle zugreifende Inbetriebnahmesoftware ermöglicht wird.

2. Funkmodul nach Anspruch 1, **dadurch gekennzeichnet, dass** das alternative Betriebssystem in dem Programmspeicher (4) in komprimierter Form abgelegt ist.

3. Funkmodul nach Anspruch 1 oder 2, **dadurch gekennzeichnet, dass** der Programmspeicher für das alternative Betriebssystem einen Sektor des der Funkschnittstelle zugeordneten Programmspeichers ist, in dem auch das erste Betriebssystem abgelegt ist.

4. Funkmodul nach einem der Ansprüche 1 bis 3, **dadurch gekennzeichnet, dass** die Einstellung des boot loaders (7) zum Betrieb der Funkschnittstelle für einen Betrieb mit dem ersten Betriebssystem voreingestellt ist.

5. Funkmodul nach einem der Ansprüche 1 bis 4, **dadurch gekennzeichnet, dass** das Funkmodul (2) als Aufsatz zu einem als Sensor und/oder Aktor ausgelegten Basismodul und der Aufsatz und das Basismodul einen Teilnehmer (1) eines Gebäudeinstallationssystems darstellen und die elektronischen Komponenten des Aufsatzes und des Basismoduls als eingebettetes System ausgeführt sind.

6. Verfahren zum Betreiben eines Funkmoduls (2) nach einem der Ansprüche 1 bis 5, **dadurch gekennzeichnet, dass** durch Einsatz einer über die Funkschnittstelle auf den boot loader (7) zugreifenden Inbetriebnahmesoftware die Voreinstellung für den Zugriff auf das erste Betriebssystem in eine Einstellung geändert wird, dass beim nächsten Hochfahren der Funkschnittstelle ein alternatives Betriebssystems verwendet wird, wenn der Daten- und Kommunikations-Bus mit dem alternativen Betriebssystem arbeitet.

7. Verfahren nach Anspruch 6, **dadurch gekennzeichnet, dass** die Änderung der Einstellung im boot loader (7) mit einer für die Installation von Busteilnehmern für das alternative Betriebssystem eingesetzten Inbetriebnahmesoftware erfolgt.

8. Verfahren nach Anspruch 7, **dadurch gekennzeichnet, dass** nach Ändern der Einstellung im boot loader (7) und erneutem Hochfahren das Funkmodul mit der Inbetriebnahmesoftware als Busteilnehmer eingerichtet wird.

9. Verfahren nach einem der Ansprüche 6 bis 8 in Rückbezug auf Anspruch 2, **dadurch gekennzeichnet, dass** nach Ändern der Voreinstellungen im boot loader (7) beim nächsten Hochfahren der Funkschnittstelle das in dem Programmspeicher (4) abgelegte alternative Betriebssystem zunächst entpackt und durch Überschreiben des ersten Betriebssytems in dem Speichersektor (5), in dem das erste Betriebssystem gespeichert ist, gespeichert wird.

10. Verfahren nach Anspruch 9, **dadurch gekennzeichnet, dass** vor dem Entpacken des alternativen Betriebssystems das erste Betriebssystem zur Freigabe von Speicherplatz komprimiert wird, wobei zumindest in einem Teil des freigewordenen Speichers das entpackte alternative Betriebssystem abgelegt wird.

## Claims

1. Radio module for a participant (1) of a building installation system with a radio interface for communication with a data and communication bus belonging to the building installation system, wherein a communication with the data and communication bus is effected with a first or an alternative operating system, **characterized by the fact** that the radio module (2) in addition to the first operating system as preset operating system provides a program memory (4) with the alternative operating system stored therein for operation of the radio interface and that the boot loader (7) responsible for booting of the radio interface provides a setting which can be influenced by the radio interface, by which in a first setting the first operating system and in a second setting the alternative operating system is booted, and that the radio module (2) is designed in a way that with first booting of the radio interface the preset operating system is loaded and afterwards the setting of the boot loader (7) can be influenced by a commissioning software accessing the radio interface.

2. Radio module in accordance with Claim 1, **characterized by the fact** that the alternative operating system is stored in packed form in the program memory (4).

3. Radio module in accordance with Claim 1 or 2, **characterized by the fact** that the program memory for the alternative operating system is a sector of the program memory assigned to the radio interface, in which program memory also the first operating system is stored.

4. Radio module in accordance with any of Claims 1 to 3, **characterized by the fact** that the setting of the boot loader (7) for operation of the radio interface is preset for operation with the first operating system.

5. Radio module in accordance with any of Claims 1 to 4, **characterized by the fact** that the radio module (2) is designed as top-piece to a basic module designed as sensor and/or actuator and the top-piece and the basic module represent a participant (1) of a building installation system and the electronic components of the top-piece and the basic module are designed as imbedded system.

6. Process for operation of a radio module (2) in accordance with any of Claims 1 to 5, **characterized by the fact** that by use of a commissioning software accessing the boot loader (7) via the radio interface, the pre-setting for access to the first operating system is changed to a setting providing that with the next booting of the radio interface an alternative operating system is used if the data and communication bus works with the alternative operating system.

7. Process in accordance with Claim 6, **characterized by the fact** that the modification of the setting in the boot loader (7) is effected with a commissioning software used for the installation of bus participants for the alternative operating system.

8. Process in accordance with Claim 7, **characterized by the fact** that after modification of the setting in the boot loader (7) and renewed booting, the radio module is installed as bus participant by means of the commissioning software.

9. Process in accordance with any of Claims 6 to 8 in its backreference to Claim 2, **characterized by the fact** that after modification of the pre-settings in the boot loader (7) with the next booting of the radio interface, the alternative operating system stored in the program memory (4) is first of all unpacked and stored in the memory sector (5) in which the first operating system is stored by overwriting the first operating system.

10. Process in accordance with Claim 9, **characterized by the fact** that before unpacking the alternative operating system the first operating system is packed to release memory space, wherein the unpacked alternative operation system is stored in at least one part of the released memory space.

## Revendications

1. Module radio pour un élément utilisateur (1) d'un système d'installation en bâtiment ou d'installation domotique avec une interface radio destinée à communiquer avec un bus de données et de communication appartenant au système d'installation en bâtiment ou d'installation domotique, une communication avec le bus de données et de communication ayant lieu avec un premier système d'exploitation ou un système d'exploitation alternatif, **caractérisé en ce que** le module radio (2) présente, outre le premier système d'exploitation faisant office de système d'exploitation prédéfini, une mémoire de programme (4) contenanr le système d'exploitation alternatif déposé dans celle-ci, pour le pilotage de l'interface radio, et **en ce que** le chargeur d'amorçage (7) responsable de la mise en route de l'interface radio présente un paramétrage pouvant être influencé par l'interface radio, par lequel, dans un premier réglage, le premier système d'exploitation et dans un second réglage le système d'exploitation alternatif est lancé, et **en ce que** le module radio (2) est configuré de telle sorte que, lors du premier démarrage de l'interface radio, le système d'exploitation prédéfini est chargé et qu'ensuite une influence du paramétrage du chargeur d'amorçage (7) par l'intermédiaire d'un logiciel de mise en service ayant accès à l'interface radio est rendue possible.

2. Module radio selon la revendication 1, **caractérisé en ce que** le système d'exploitation alternatif est déposé sous forme comprimée dans la mémoire de programme (4).

3. Module radio selon la revendication 1 ou 2, **caractérisé en ce que** la mémoire de programme pour le système d'exploitation alternatif est un secteur de la mémoire de programme attribuée à l'interface radio dans lequel est déposé également le premier système d'exploitation.

4. Module radio selon l'une des revendications 1 à 3, **caractérisé en ce que** le paramétrage du chargeur d'amorçage (7) pour le pilotage de l'interface radio est préparamétré pour un fonctionnement avec le premier système d'exploitation.

5. Module radio selon l'une des revendications 1 à 4, **caractérisé en ce que** le module radio (2) en tant qu'élément rapporté à un module de base conçu sous forme de capteur et/ou d'acteur et l'élément rapporté et le module de base constituent un élément utilisateur (1) d'un système d'installation en bâtiment ou d'installation domotique et que les éléments électroniques de l'élément rapporté et du module de base sont réalisés sous forme de système encastré.

6. Procédé pour le pilotage d'un module radio (2) selon l'une des revendications 1 à 5, **caractérisé en ce que,** par la mise en oeuvre d'un logiciel de mise en service accédant au chargeur d'amorçage (7) par l'intermédiaire de l'interface radio, le paramétrage prédéfini pour l'accès au premier système d'exploitation est modifié en un paramétrage de telle sorte que, lors du prochain démarrage de l'interface radio, c'est un système d'exploitation alternatif qui est utilisé si le bus de données et de communication travaille avec le système d'exploitation alternatif.

7. Procédé selon la revendication 6, **caractérisé en ce que** la modification du paramétrage dans le chargeur d'amorçage (7) a lieu avec un logiciel de mise en service mis en oeuvre pour l'installation d'éléments utilisateurs du bus pour le système d'exploitation alternatif.

8. Procédé selon la revendication 7, **caractérisé en ce que,** après modification du paramétrage dans le chargeur d'amorçage (7) et relancement, le module radio est configuré avec le logiciel de mise en service en tant qu'élément utilisateur du bus.

9. Procédé selon l'une des revendications 6 à 8 dans sa référence à la revendication 2, **caractérisé en ce que,** après modification des paramétrages prédéfinis dans le chargeur d'amorçage (7), lors du prochain démarrage de l'interface radio, le système d'exploitation alternatif déposé dans la mémoire de programme (4) est tout d'abord décompressé et mémorisé par sur-écriture du premier système d'exploitation dans le secteur de mémoire (5) dans lequel le premier système d'exploitation est mémorisé.

10. Procédé selon la revendication 9, **caractérisé en ce que,** avant la décompression du système d'exploitation alternatif, le premier système d'exploitation est comprimé afin de libérer de l'emplacement de mémoire, le système d'exploitation alternatif décompressé étant déposé au moins dans une partie de la mémoire ainsi libérée.
